# FASCICULE DE BREVET EUROPEEN

(11) **EP 0 800 982 B1**
(45) Date de publication et mention de la délivrance du brevet: **08.12.1999**
(21) Numéro de dépôt: 97400486.3
(22) Date de dépôt: 03.03.1997
(51) Int. Cl.: B62D 43/02

(54) **Dispositif de support d'une roue de secours sur l'arrière d'un véhicule automobile**
Haltevorrichtung für das Ersatzrad am hinteren Ende eines Fahrzeuges
Support device for the spare wheel at the rear of a motorcar

(30) Priorité: 11.04.1996 FR 9604529
(43) Date de publication de la demande: 15.10.1997
(73) Titulaire: AUTOMOBILES PEUGEOT, 75116 Paris (FR); AUTOMOBILES CITROEN, 92200 Neuilly-sur-Seine (FR)
(72) Inventeur: Perez, Philippe, 78250 Tessancourt (FR)
(74) Mandataire: Lanceplaine, Jean-Claude

(56) Documents cités:
- US-A- 2 354 944
- US-A- 4 718 582
- US-A- 4 948 024
- US-A- 5 183 192
- US-A- 5 186 371

## Description

La présente invention a pour objet un dispositif de support d'une roue de secours sur l'arrière d'un véhicule automobile, comme par exemple un véhicule tout terrain ou un camping-car.

Les véhicules automobiles sont équipés d'une roue de secours qui, selon le type de véhicule, peut être disposée à différents emplacements, comme par exemple au-dessous du coffre du véhicule ou dans le coffre ou sur le capot ou sur le toit ou encore sur l'arrière du véhicule.

Mais, ces différentes solutions pour l'emplacement de la roue de secours présentent des inconvénients.

En effet, la solution consistant à placer la roue de secours au-dessous du plancher du coffre du véhicule n'est utilisable que pour des véhicules d'une certaine taille ou bien possédant un porte-à-faux arrière suffisamment important.

La fixation de la roue de secours dans le coffre verticalement à droite ou à gauche près du passage de roue arrière ou à plat diminue l'espace intérieur du coffre.

De plus, étant donné cet emplacement et le poids de la roue de secours qui dans certains cas est relativement important, notamment pour des véhicules tout terrain, la personne effectuant un changement de roue est obligée de soulever la roue de secours et de la porter jusqu'au sol.

Le positionnement de la roue de secours sur le toit ou sur le capot diminue la pénétration dans l'air du véhicule ainsi que le champ de vision du conducteur lorsque cette roue de secours est placée sur le capot du véhicule.

La solution consistant à placer la roue de secours sur un hayon du véhicule ou sur une porte arrière de ce véhicule nécessite l'emploi de charnières adaptées pour supporter le poids de cette roue de secours et du hayon ou de la porte et de ce fait de charnières d'un coût relativement élevé.

D'autre part, la fixation de la roue de secours sur une porte pivotante horizontalement nécessite un espace d'évolution à l'arrière du véhicule, égal à la longueur de la porte, ce qui pour une utilisation urbaine est astreignant. Le brevet US - A - 5 186 371 décrit un support tubulaire pour la roue de secours, qui, dans une première position est fixé sur l'arrière du vehicule, dans une seconde position assure le dégagement du coffre et dans une troisième position permet d'abaisser la roue de secours sur le sol.

L'invention a pour but d'éviter ces inconvénients en proposant un dispositif de support d'une roue de secours sur l'arrière d'un véhicule automobile, comme par exemple un véhicule tout terrain ou un camping-car, qui permet un accès libre au coffre du véhicule et qui évite de soulever cette roue de secours lors d'une crevaison, tout en protégeant cette roue de secours lorsque le coffre du véhicule est fermé.

L'invention a donc pour objet un dispositif de support d'une roue de secours sur l'arrière d'un véhicule automobile, comme par exemple un véhicule tout terrain ou un camping-car, du type comportant un hayon de fermeture du coffre monté pivotant sur le toit du véhicule, caractérisé en ce qu'il comprend un berceau de soutien de la roue de secours, des moyens de déplacement par coulissement du berceau entre une première position de fixation sur l'arrière du véhicule, une seconde position de dégagement du coffre et une troisième position d'extraction de la roue de secours de ce berceau et des moyens de verrouillage dudit berceau et de ladite roue de secours dans la première position de fixation sur l'arrière du véhicule.

Selon d'autres caractéristiques de l'invention:
- le berceau comporte un logement correspondant sensiblement à la moitié de la roue de secours,
- les moyens de déplacement par coulissement du berceau sont formés par un rail disposé à l'arrière du véhicule et par des organes de roulement coopérant avec ledit rail et montés sur une platine solidaire dudit berceau,
- le rail comporte une première portion s'étendant sensiblement du milieu jusqu'à un côté du véhicule, une seconde portion s'étendant sur une partie dudit côté, et une troisième portion inclinée vers le bas du véhicule et s'étendant sensiblement dudit milieu jusqu'à l'autre côté dudit véhicule,
- la seconde portion du rail est montée articulée sur la première portion de ce rail et déplaçable entre une position rabattue sur le côté correspondant du véhicule et une position rabattue sur ladite première portion du rail,
- les organes de roulement sont formés par deux galets à axes horizontaux et roulant dans -ledit rail,
- chaque galet est monté sur un support coulissant longitudinalement et pivotant sur un plan horizontal,
- la platine comporte, à sa partie inférieure et au-dessous des deux galets à axes horizontaux, un galet de guidage à axe vertical et s'appuyant sur la carrosserie du véhicule,
- la platine a la forme d'un T,
- les moyens de verrouillage du berceau et de la roue de secours dans la première position de fixation sur l'arrière du véhicule sont formés, d'une part, par une cavité ménagée à la partie inférieure du hayon et destinée à recouvrir la partie supérieure de la roue de secours et, d'autre part, par une encoche ménagée à l'arrière du véhicule et destinée à recevoir le galet de guidage dans ladite position de fixation,
- le berceau comporte à sa périphérie un volet formant une rampe pour l'extraction de la roue de secours de ce berceau ou l'introduction de ladite roue de secours dans ledit berceau.

L'invention sera mieux comprise à la lecture de la description qui va suivre, donnée uniquement à titre d'exemple, pour la compréhension de laquelle on se référera aux dessins annexés, dans lesquels :
- la Fig. 1 est une vue schématique de l'arrière d'un véhicule automobile équipé d'un dispositif de support selon l'invention d'une roue de secours,
- la Fig. 2 est une vue schématique de l'arrière du véhicule automobile avec le hayon de coffre ouvert,
- la Fig. 3 est une vue schématique de côté du véhicule automobile de la Fig. 1,
- la Fig. 4 est une vue schématique de l'arrière du véhicule automobile montrant le déplacement du dispositif du support de la roue de secours entre la position de fixation et la position du dégagement du coffre,
- la Fig. 5 est une vue schématique de l'arrière du véhicule automobile montrant le dispositif de support de la roue de secours dans la position de dégagement du coffre,
- la Fig. 6 est une vue schématique de l'arrière du véhicule automobile montrant le dispositif de support de la roue de secours dans la position d'extraction de ladite roue de secours,
- la Fig. 7 est une vue schématique en perspective d'un premier mode de réalisation du dispositif de support de la roue de secours,
- la Fig. 8 est une vue de côté d'un galet de déplacement du dispositif de support de la roue de secours,
- la Fig. 9 est une vue en coupe selon la ligne 9-9 de la figure 2,
- la Fig. 10 est une vue de dessus montrant la position des galets lors du déplacement du dispositif de support de la roue de secours,
- la Fig. 11 est une vue schématique en perspective d'un second mode de réalisation dudit dispositif de support de la roue de secours.

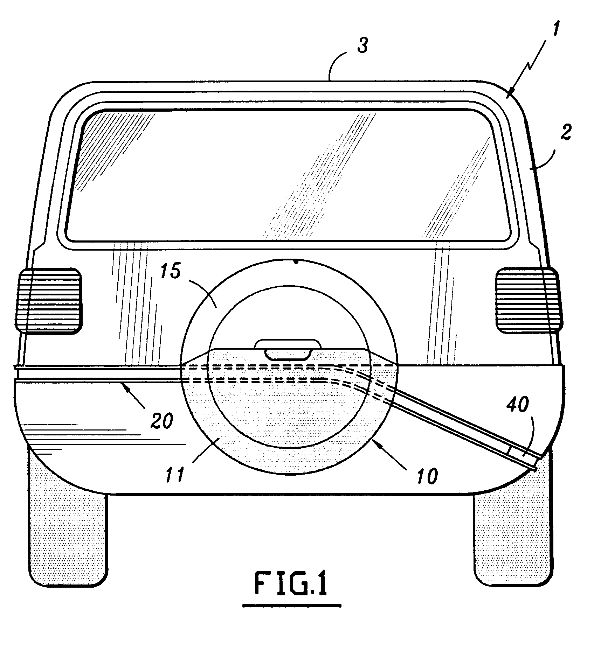

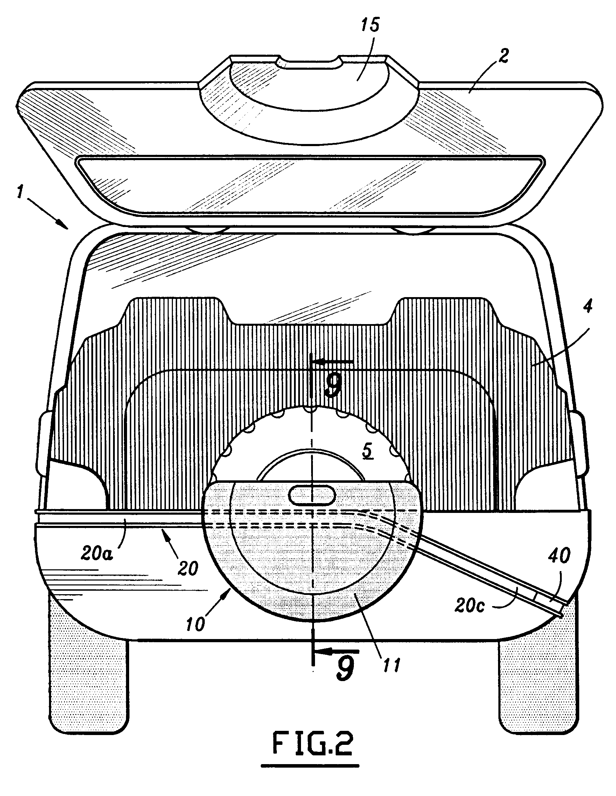

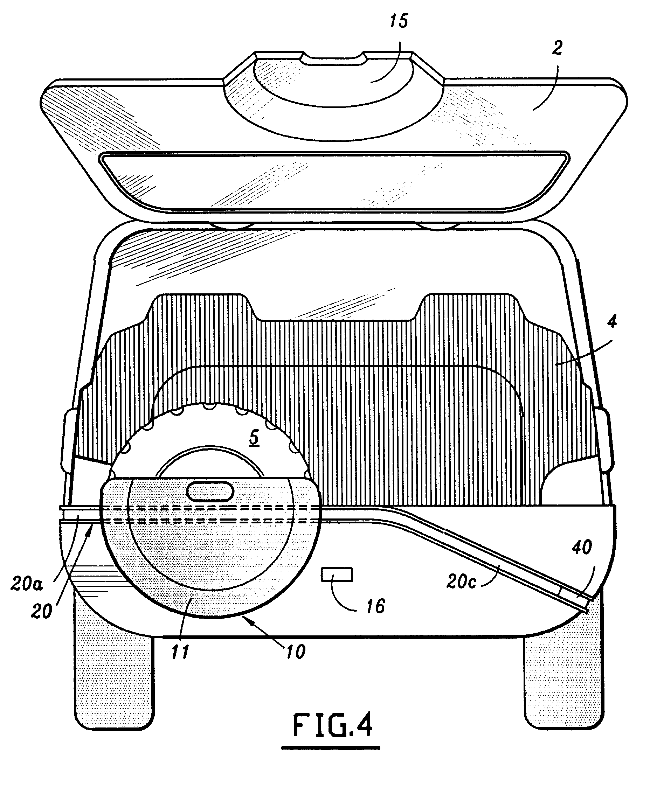

Sur les Figs. 1 à 6, on a représenté schématiquement un véhicule automobile, par exemple tout terrain, désigné dans son ensemble par la référence 1, et qui comporte, de manière classique, un hayon 2 monté pivotant sur le bord arrière du toit 3 du véhicule, entre une première position de fermeture du coffre 4, comme représentée à la Fig. 1 et une seconde position d'ouverture du coffre 4, comme représentée à la Fig. 2.

Le véhicule 1 est équipé d'une roue de secours 5 qui dans l'exemple de réalisation représenté sur les figures est monté sur un dispositif de support 10 disposé sur l'arrière de ce véhicule 1.

Ce dispositif 10 de support de la roue de secours 5 est formé par un berceau 11 qui comporte un logement correspondant sensiblement à la moitié de la roue de secours 5, comme représenté à la Fig. 2.

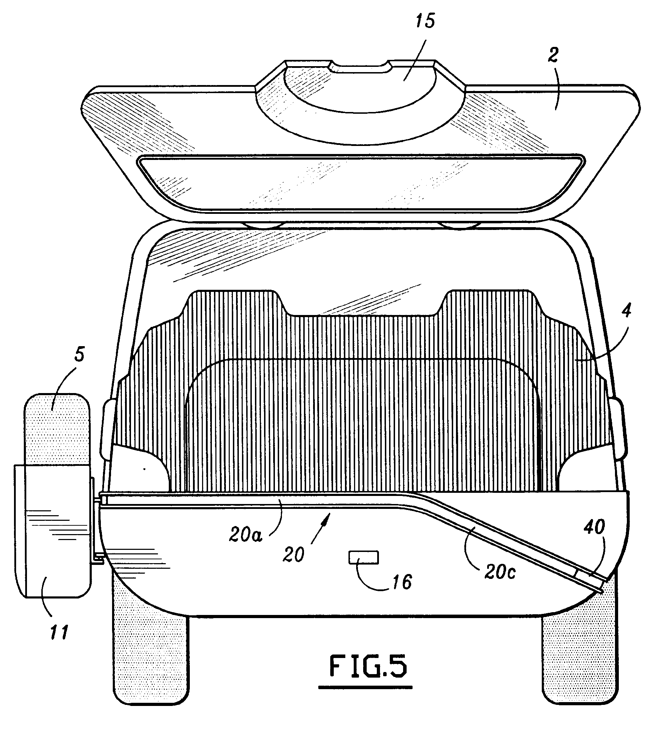

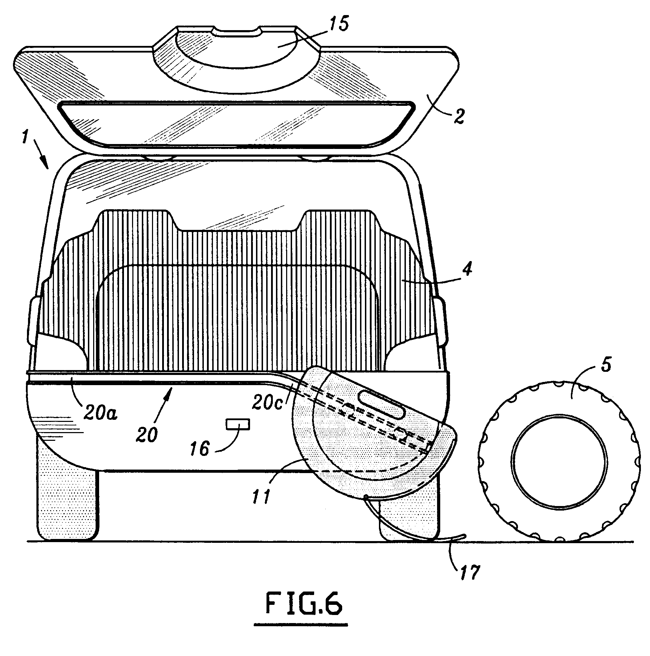

D'autre part, le dispositif 10 de support de la roue de secours 5 comporte des moyens de déplacement par coulissement du berceau 11 entre une première position de fixation sur l'arrière du véhicule 1, comme représentée sur les Figs. 1 et 2, une seconde position de dégagement du coffre 4, comme représentée à la Fig. 5, et une troisième position d'extraction de la roue de secours 5 du berceau 11, comme représentée à la Fig. 6.

De plus, le dispositif 10 de support de la roue de secours 5 comporte des moyens de verrouillage du berceau 11 et de ladite roue de secours 5 dans la première position de fixation sur l'arrière du véhicule 1.

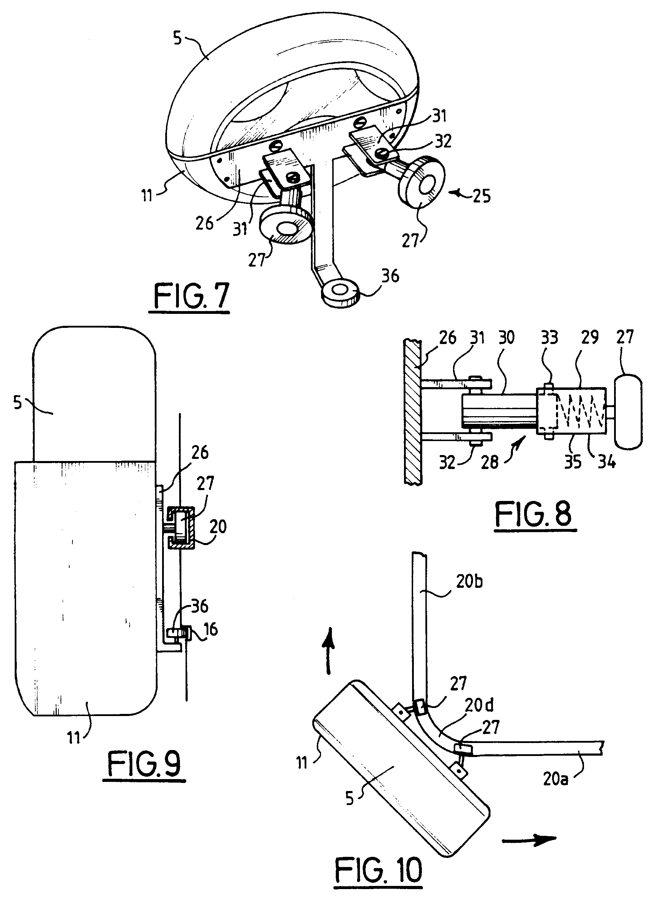

Les moyens de déplacement par coulissement du berceau 11 et de la roue de secours 5 entre les différentes positions sont formés par un rail 20 disposé à l'arrière du véhicule 1, comme représenté sur les Figs. 1 à 6 et par des organes de roulement 25 coopérant avec ledit rail 20 et montés sur une platine 26 solidaire du berceau 11, comme représenté sur les Figs. 7 à 11.

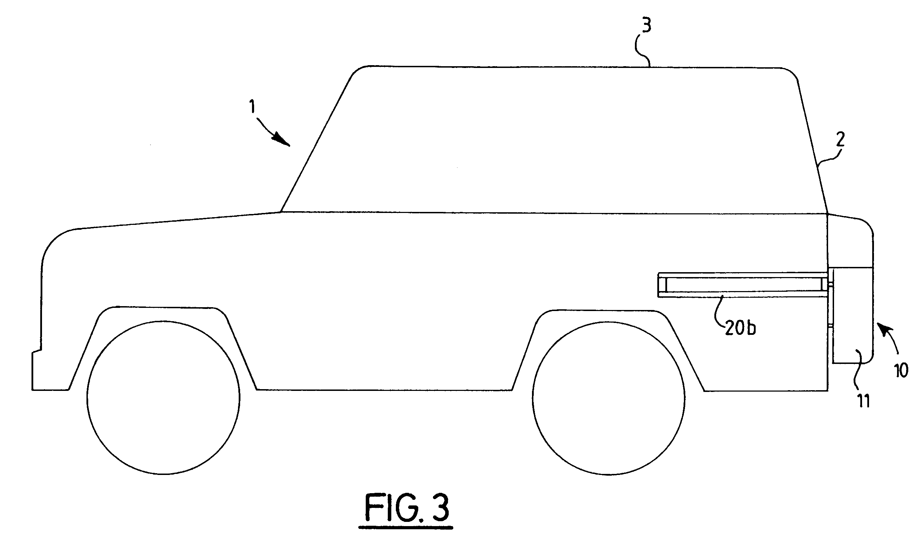

Le rail 20 comporte une première portion 20a s'étendant sensiblement du milieu jusqu'à un côté du véhicule 1, une seconde portion 20b s'étendant sur une partie dudit côté (Fig. 3) et une troisième portion 20c inclinée vers le bas du véhicule et s'étendant sensiblement du milieu jusqu'à l'autre côté dudit véhicule 1.

Selon un premier mode de réalisation représenté sur les figures, la seconde portion 20b du rail 20 est fixée sur le côté correspondant du véhicule 1.

Selon un second mode de réalisation non représenté, la seconde portion 20b du rail 20 est montée articulée sur la première portion 20a de ce rail 20 et déplaçable entre une position rabattue sur le côté correspondant du véhicule 1 et une position rabattue sur ladite première portion 20a du rail 20.

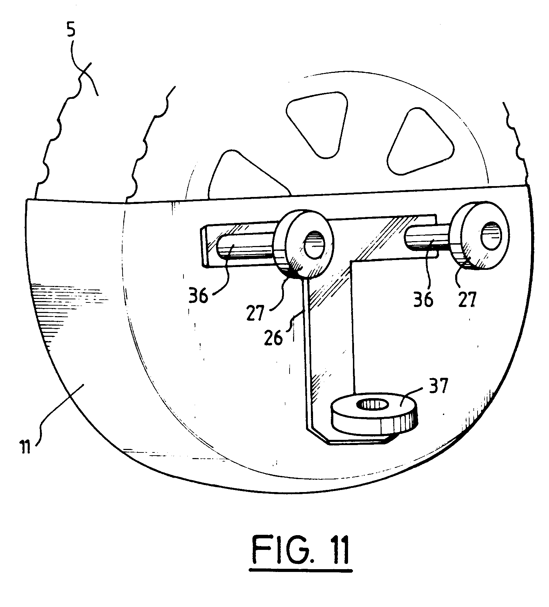

Ainsi que représenté sur les Figs. 7 et 11, la platine 26 solitaire du berceau 11 a par exemple la forme d'un T et les organes de roulement 25 coopérant avec le rail 20 sont formés par deux galets 27 à axes horizontaux.

Deux options sont possibles pour le montage des galets 27 sur la platine 26.

Dans le cas où la seconde portion 20b du rail 20 est fixé sur le côté du véhicule, les galets 27 doivent pouvoir passer entre la première portion 20a et la seconde portion 20b du rail 20, c'est-à-dire franchir la portion courbe 20d de ce rail 20, comme représenté à la Fig. 10.

Pour cela, chaque galet 27 est monté sur un support 28 coulissant longitudinalement et pivotant dans un plan horizontal.

Ainsi que représenté à la Fig. 8, le support 28 de chaque galet 27 est formé par un premier tube 29 supportant le galet 27 et monté coulissant sur un second tube 30 qui est lui-même monté pivotant dans un plan horizontal sur la platine 26 par l'intermédiaire d'un étrier 31 et d'un axe 32.

Le second tube 30 comporte à son extrémité opposée à celle reliée à l'étrier 31, des ergots 33 uniformément répartis et coopérant avec des rainures longitudinales 34 ménagées dans le premier tube 39 de façon à relier en rotation lesdits tubes 29 et 30 l'un à l'autre, tout en permettant au premier tube 29 de coulisser longitudinalement sur le second tube 30.

Un ressort de compression 35 est interposé entre le fond du premier tube 29 et l'extrémité du second tube 30.

Grâce à ce montage, chaque galet 27 est donc déplaçable longitudinalement et peut pivoter dans un plan horizontal autour de l'axe 32.

Dans le cas où la seconde portion 20b du rail 20 est déplaçable entre une position située dans le prolongement de la première portion 20a du rail 20 et une position rabattue sur le côté du véhicule, chaque galet 27 est monté sur un axe 36 fixé sur la platine 26 (Fig. 11) .

Ainsi, le seul degré de liberté de chaque galet 27 est sa rotation sur lui-même.

Par ailleurs, la platine 26 comporte à sa partie inférieure et au-dessous des deux galets 27 à axes horizontaux, un galet de guidage 36 à axe vertical et destiné à venir s'appuyer sur la carrosserie du véhicule automobile 1.

Les moyens de verrouillage du berceau 11 et de la roue de secours 5 dans la première position de fixation sur l'arrière du véhicule 1, comme représentée sur les Figs. 1 et 2, sont formés, d'une part, par une cavité 15 ménagée à la partie inférieure du hayon 2 et destinée à recouvrir la partie supérieure de la roue de secours 5 lorsque ce hayon 2 est fermé et, d'autre part, par une encoche 16 ménagée à l'arrière du véhicule 1 et destinée à recevoir le galet de guidage 36 dans ladite position de fixation, comme représentée sur la Fig. 9.

Enfin, le berceau 11 comporte à sa périphérie, un volet 17 formant , lorsqu'il est ouvert, une rampe pour l'extraction ou l'introduction de la roue de secours du berceau 11, comme représenté à la Fig. 6.

En utilisation normale du véhicule, le berceau 11 et la roue de secours 5 sont positionnés sensiblement au milieu de l'arrière de ce véhicule (Fig. 1).

Le berceau 11 et la roue de secours 5 sont maintenus dans cette position grâce au galet 36 à axe vertical qui pénètre dans l'encoche 16 et grâce à la cavité 15 du hayon 2 qui recouvre une partie de la roue de secours 5.

La forme de la cavité 15 est complémentaire à celle du berceau 11 de telle manière que cette cavité 15 et le berceau 11 recouvrent complètement la roue de secours 5 lorsque le hayon est fermé.

Le dispositif de support selon l'invention offre trois possibilités, une ouverture rapide du coffre avec dégagement partiel de celui-ci, un dégagement total du coffre et un positionnement de la roue de secours à proximité du sol en cas de crevaison.

Pour un accès rapide au coffre, il suffit à l'utilisateur d'ouvrir le hayon 2 (Fig. 2).

Lorsque l'utilisation du coffre 4 nécessite un dégagement maximal, l'utilisateur ouvre le hayon 2 et déverrouille le berceau 11 en dégageant le galet 36 à axe vertical de l'encoche 16.

Ensuite, l'utilisateur déplace par coulissement le berceau 11 et la roue de secours 5 horizontalement le long de la première portion 20a du rail 20.

Dans le cas où la seconde portion 20b de ce rail 20 est fixe, l'utilisateur continue à déplacer par coulissement le berceau 11 pour faire franchir à ce berceau 11 la portion courbe 20d située entre les deux portions 20a et 20b du rail 20.

Lors du franchissement de cette portion courbe 20d, chaque galet 27, grâce à ses différents degrés de liberté, pivote dans un plan horizontal et coulisse longitudinalement selon la courbure de ladite portion 20d.

Ensuite, l'utilisateur continue à déplacer par coulissement le berceau 11 de telle manière que le berceau 11 et la roue de secours 5 viennent se positionner verticalement sur le côté du véhicule afin de dégager complètement l'ouverture du coffre 4 (Fig. 5).

Dans le cas où la seconde portion 20b du rail 20 est montée pivotante sur la première portion 20a, l'utilisateur amène tout d'abord cette seconde portion 20b dans le prolongement de la première portion 20a et déplace le berceau 11 et la roue de secours 5 pour amener cet ensemble, de la portion 20a sur la seconde portion 20b du rail 20.

L'utilisateur rabat ensuite la portion 20b supportant le berceau 11 et la roue de secours 5 de telle manière que cet ensemble vienne se positionner verticalement sur le côté du véhicule afin de dégager complètement l'ouverture du coffre 4.

Lorsque le berceau 11 et la roue de secours 5 sont en position centrale à l'arrière du véhicule, la seconde portion 20b pivotante peut être rabattue sur la première portion 20a et maintenue sur cette première portion par des moyens appropriés.

En cas de crevaison, l'utilisateur ouvre le hayon 2 et déverrouille le berceau 11 en dégageant le galet 36 à axe horizontal de l'encoche 16 et déplace progressivement le berceau 11 et la roue de secours 5 sur la troisième portion 20c inclinée du rail 20 afin d'amener le berceau 11 jusqu'à l'extrémité de cette portion 20c et approximité du sol, comme représenté à la Fig. 6.

Le déplacement du berceau 11 sur la portion 20c inclinée est limité par une butée 40.

Pour extraire la roue de secours 5 du berceau 11, l'utilisateur ouvre le volet 17 qui forme une rampe de façon à pouvoir faire rouler la roue de secours 5 du berceau 11 jusqu'au sol.

Le volet 17 sert également de rampe pour l'introduction de la roue crevée dans le berceau 11.

Ensuite, l'utilisateur replace le berceau 11 avec la roue crevée en position centrale à l'arrière du véhicule.

Le dispositif selon l'invention de support de roue de secours présente de nombreux avantages.

En effet, l'utilisateur dispose des avantages d'un hayon comme par exemple la facilité d'utilisation et l'accès au coffre, tout en ayant la roue de secours fixée à l'arrière du véhicule et en évitant que cette roue de secours soit supportée par la partie ouvrante.

De plus, la roue de secours est protégée lorsque le coffre est fermé.

Enfin, lors d'une crevaison, l'utilisateur n'a pas à soulever la roue de secours et sa manipulation est facilitée grâce à la pente constante du rail sur lequel coulisse le berceau ce qui évite des manoeuvres fastidieuses.

## Revendications

1. Dispositif de support d'une roue de secours (5) sur l'arrière d'un véhicule (1), comme par exemple un véhicule tout terrain ou un camping-car, du type comportant un hayon (2) de fermeture du coffre (4), monté pivotant sur le toit (3) du véhicule (1), caractérisé en ce qu'il comprend un berceau (11) de soutien de la roue de secours(5), des moyens (20 - 25) de déplacement par coulissement du berceau (11) entre une première position de fixation sur l'arrière du véhicule (1), une seconde position de dégagement du coffre (4) et une troisième position d'extraction de la roue de secours (5) de ce berceau (11) et des moyens(15 - 16 - 36) de verrouillage dudit berceau (11) et de ladite roue de secours (5) dans la première position de fixation sur l'arrière du véhicule (1).

2. Dispositif selon la revendication 1, caractérisé en ce que le berceau (11) comporte un logement correspondant sensiblement à la moitié de la roue de secours (5) .

3. Dispositif selon la revendication 1, caractérisé en ce que les moyens de déplacement par coulissement du berceau (11) sont formés par un rail (20) disposé à l'arrière du véhicule (1) et par des organes de roulement (25) coopérant avec ledit rail (20) et montés sur une platine (26) solidaire du berceau (11).

4. Dispositif selon la revendication 3, caractérisé en ce que le rail (20) comporte une première portion (20a) s'étendant sensiblement du milieu jusqu'à un côté du véhicule (1), une seconde portion (20b) s'étendant sur une partie dudit côté et une troisième portion (20c) inclinée vers le bas du véhicule (1) et s'étendant sensiblement dudit milieu jusqu'à l'autre côté dudit véhicule (1).

5. Dispositif selon la revendication 4, caractérisé en ce que la seconde portion (20b) du rail (20) est montée articulée sur la première portion (20a) de ce rail (20) et déplaçable entre une position rabattue sur le côté correspondant du véhicule (1) et une position rabattue sur ladite première portion (20a) du rail (20).

6. Dispositif selon la revendication 3, caractérisé en ce que les organes de roulement (25) sont formés de deux galets (27) à axes horizontaux et roulant dans ledit rail (20).

7. Dispositif selon la revendication 6, caractérisé en ce que chaque galet (27) est monté sur un support (28) coulissant longitudinalement et pivotant dans un plan horizontal.

8. Dispositif selon les revendications 3 et 6, caractérisé en ce que la platine (26) comporte, à sa partie inférieure et au-dessous des deux galets (27) à axes horizontaux, un galet (36) de guidage à axe vertical et s'appuyant sur la carrosserie du véhicule (1).

9. Dispositif selon les revendications 3 et 8, caractérisé en ce que la platine (26) a la forme d'un T.

10. Dispositif selon l'une quelconque des revendications précédentes, caractérisé en ce que les moyens de verrouillage du berceau (11) et de la roue de secours (5) dans la première position de fixation sur l'arrière du véhicule sont formés, d'une part, par une cavité (15) ménagée à la partie inférieure du hayon(2) et destinée à recouvrir la partie supérieure de la roue de secours (5) et, d'autre part, par une encoche (16) ménagée à l'arrière du véhicule (1) et destinée à recevoir le galet de guidage (36) dans ladite position de fixation .

11. Dispositif selon les revendications 1 et 2, caractérisé en ce que le berceau (11) comporte à sa périphérie un volet (17) formant une rampe pour l'extraction de la roue de secours (5) du berceau (11) ou l'introduction de cette roue de secours (5) dans ledit berceau (11).

## Claims

1. Support device for a spare wheel (5) on the rear of a vehicle (1), such as for example an all terrain vehicle or camper-van, of the type comprising a rear door (2) for closing the boot (4), pivotably mounted on the roof (3) of the vehicle (1), characterised in that it comprises a support cradle (11) for the spare wheel (5), means (20 - 25) for slidably moving the cradle (11) between a first position of attachment to the rear of the vehicle (1), a second position of releasing the boot (4) and a third position of removing the spare wheel (5) from this cradle (11) and means (15 - 16 - 36) for locking said cradle (11) and said spare wheel (5) in the first position of attachment to the rear of the vehicle (1).

2. Device according to claim 1, characterised in that the cradle (11) comprises a housing corresponding to substantially half the spare wheel (5).

3. Device according to claim 1, characterised in that the means for slidably moving the cradle (11) are formed by a rail (20) located at the rear of the vehicle (1) and rolling means (25) cooperating with said rail (20) and mounted on a plate (26) integrally connected to the cradle (11).

4. Device according to claim 3, characterised in that the rail (20) comprises a first portion (20a) extending substantially from the middle to one side of the vehicle (1), a second portion (20b) extending over part of said side and a third portion (20c) inclined towards the bottom of the vehicle (1) and extending substantially from said middle to the other side of said vehicle (1).

5. Device according to claim 4, characterised in that the second portion (20b) of the rail (20) is articulated on the first portion (20a) of this rail (20) and is movable between a position in which it is folded onto the corresponding side of the vehicle (1) and a position in which it is folded onto said first portion (20a) of the rail (20).

6. Device according to claim 3, characterised in that the rolling means (25) are formed by two rollers (27) of horizontal axis rolling along said rail (20).

7. Device according to claim 6, characterised in that each roller (27) is mounted on a support (28) which slides longitudinally and pivots in a horizontal plane.

8. Device according to claims 3 and 6, characterised in that the plate (26) comprises, at its lower part and below the two rollers (27) of horizontal axis, a guide roller (36) of vertical axis supported on the bodywork of the vehicle (1).

9. Device according to claims 3 and 8, characterised in that the plate (26) is in the shape of a T.

10. Device according to any one of the preceding claims, characterised in that the locking means for the cradle (11) and for the spare wheel (5) in the first position of attachment to the rear of the vehicle are formed on the one hand by a cavity (15) provided at the lower part of the rear door (2) and intended to cover the upper part of the spare wheel (5) and, on the other hand, by a notch (16) provided on the rear of the vehicle (1) and adapted to accommodate the guide roller (36) in said position of attachment.

11. Device according to claims 1 and 2, characterised in that the cradle (11) comprises on its periphery a flap (17) forming a ramp for removal of the spare wheel (5) from the cradle (11) or for introducing said spare wheel (5) into said cradle (11).

## Patentansprüche

1. Haltevorrichtung für ein Ersatzrad (5) am hinteren Ende eines Fahrzeugs (1) wie beispielsweise eines Geländefahrzeugs oder eines Campingfahrzeugs des Typs mit einer am Dach (3) des Fahrzeugs (1) angelenkten Heckklappe (2) zum Verschließen des Kofferraums (4), dadurch gekennzeichnet, daß sie einen Träger (11) zum Halten des Ersatzrades (5), Mittel (20-25) zum gleitenden Verschieben des Trägers (11) zwischen einer ersten Position der Befestigung am hinteren Ende des Fahrzeugs (1), einer zweiten Position der Entfernung vom Kofferraum (4) und einer dritten Position der Entnahme des Ersatzrades (5) aus diesem Träger (5) sowie Mittel (15-16-36) zum Verriegeln des Trägers (11) und des Ersatzrades (5) in der ersten Position zum Befestigen am hinteren Ende des Fahrzeugs (1) aufweist.

2. Vorrichtung nach Anspruch 1, dadurch gekennzeichnet, daß der Träger (11) einen Aufnahmesitz aufweist, der im wesentlichen der Hälfte des Ersatzrades (5) entspricht.

3. Vorrichtung nach Anspruch 1, dadurch gekennzeichnet, daß die Mittel zum gleitenden Verschieben des Trägers (11) aus einer Schiene (20), die am hinteren Ende des Fahrzeugs (1) angeordnet ist, und aus Rollelementen (25), die mit der Schiene (20) zusammenwirken und an einer mit dem Träger (11) fest verbundenen Halteplatte (26) angebracht sind, gebildet sind.

4. Vorrichtung nach Anspruch 3, dadurch gekennzeichnet, daß die Schiene (20) einen ersten Abschnitt (20a), der sich im wesentlichen von der Mitte bis zu einer Seite des Fahrzeugs (1) erstreckt, einen zweiten Abschnitt (20b), der sich über einen Teil dieser Seite erstreckt, sowie einen dritten Abschnitt (20c) aufweist, der zur Unterseite des Fahrzeugs (1) geneigt ist und sich im wesentlichen von der Mitte bis zur anderen Seite des Fahrzeugs (1) erstreckt.

5. Vorrichtung nach Anspruch 4, dadurch gekennzeichnet, daß der zweite Abschnitt (20b) der Schiene (20) am ersten Abschnitt (20a) dieser Schiene (20) angelenkt ist und zwischen einer zur entsprechenden Seite des Fahrzeugs (1) umgeklappten Stellung und einer zum ersten Abschnitt (20a) der Schiene (20) umgeklappten Stellung verschiebbar ist.

6. Vorrichtung nach Anspruch 3, dadurch gekennzeichnet, daß die Rollelemente (25) aus zwei Rollen (27) mit horizontalen Achsen gebildet sind, die in der Schiene (20) rollen.

7. Vorrichtung nach Anspruch 6, dadurch gekennzeichnet, daß jede Rolle (27) an einer Halterung (28) angebracht ist, die longitudinal gleitet und in einer horizontalen Ebene schwenkt.

8. Vorrichtung nach den Ansprüchen 3 und 6, dadurch gekennzeichnet, daß die Halteplatte (26) an ihrem unteren Teil und unterhalb der beiden Rollen (27) mit horizontalen Achsen eine Führungsrolle (26) mit vertikaler Achse aufweist, die sich an der Karosserie des Fahrzeugs (1) abstützt.

9. Vorrichtung nach den Ansprüchen 3 und 8, dadurch gekennzeichnet, daß die Halteplatte (26) T-Form besitzt.

10. Vorrichtung nach einem der vorangehenden Ansprüche, dadurch gekennzeichnet, daß die Mittel zum Verriegeln des Trägers (10) und des Ersatzrades (5) in der ersten Befestigungsposition am hinteren Ende des Fahrzeugs einerseits aus einem Hohlraum (15), der im unteren Teil der Heckklappe (2) ausgebildet und dazu bestimmt ist, den oberen Teil des Ersatzrades (5) abzudecken, und andererseits aus einer Tasche (16), die am hinteren Ende des Fahrzeugs (1) ausgebildet und dazu bestimmt ist, die Führungsrolle (36) in der Befestigungsposition aufzunehmen, gebildet sind.

11. Vorrichtung nach den Ansprüchen 1 und 2, dadurch gekennzeichnet, daß der Träger (11) an seinem Umfang eine Klappe (17) aufweist, die eine Rampe für die Entnahme des Ersatzrades (5) aus dem Träger (11) oder für die Einführung dieses Ersatzrades (5) in den Träger bildet.
